# EUROPÄISCHE PATENTSCHRIFT

(11) **EP 0 286 972 B1**
(45) Veröffentlichungstag und Bekanntmachung des Hinweises auf die Patenterteilung: **23.06.1993**
(21) Anmeldenummer: 88105506.5
(22) Anmeldetag: 07.04.1988
(51) Int. Cl.: B29C 45/18

(54) **Vorrichtung zum Beschicken von Spritzgiesseinheiten**
Apparatus for filling injection-moulding units
Dispositif pour alimenter des unités à mouler par injection

(30) Priorität: 15.04.1987 DE 3712828
(43) Veröffentlichungstag der Anmeldung: 19.10.1988
(73) Patentinhaber: Krauss-Maffei Aktiengesellschaft, 80997 München (DE)
(72) Erfinder: Meixner, Franz, D-8000 München 60 (DE)

(56) Entgegenhaltungen:
- DE-A- 1 607 780
- DE-A- 2 218 353
- FR-A- 1 085 119
- US-A- 2 799 047

## Beschreibung

Die Erfindung bezieht sich auf eine Vorrichtung zum Beschicken von Spritzgießeinheiten gemäß dem Oberbegriff des Patentanspruchs 1.

Bei bestimmten, insbesondere nicht freifließenden oder zähfließenden Materialien wie z.B. glasfaserbeladenem Polyestermaterial besteht das Problem, daß solche Materialien von Schnecken nicht selbsttätig eingezogen werden. Es ist daher erforderlich, auf das Material eine zusätzliche Kraft auszuüben, damit es von der Schnecke in die Schneckengänge bzw. in den Schneckenkanal eingezogen wird. Bekannte Vorrichtungen der eingangs genannten Art sind daher mit einem als Stopfzylinder ausgebildeten Einfüllschacht versehen, wobei der erforderliche Druck auf das Material durch einen Kolben ausgeübt wird. Solche Vorrichtungen sind jedoch für einen automatischen Betrieb der Anlage sehr aufwendig. Sie erlauben vor allem keine kontinuierliche Beschickung mit Ausgangsmaterial, was durch die Arbeitsweise der Kolben-Zylinder-Einheit bedingt ist.

Nach DE-A-1 607 780 ist eine Mischvorrichtung mit umlaufendem Mischbehälter und geneigter Rotationsachse sowie einer Mischschnecke bekannt, wobei der Mischbehälter als Rotationskörper mit einem um eine Rotationsachse drehbaren Mantel ausgebildet ist und die Mischschnecke durch den Rotaionskörper im Bereich der Mantelinnenfläche hindurchgeführt ist.

Eine derartige Mischvorrichtung ist jedoch zum Beschicken von Spritzgießeinheiten mit von Schnecken nicht selbstätig einzugsfähigen Materialien, insbesondere von nicht freifließenden oder zähfließenden Materialien wie z.B. glasfaserbeladenem Polyestermaterial, nicht geeignet. Mit einer solchen Vorrichtung kann der zum Beschicken von Spritzgießeinheiten erforderliche Druckaufbau bzw. Fülldruck nicht erzielt werden, wenn der Austrag der Förderschnecke, wie dargestellt, in die freie Atmosphäre erfolgt. Besonders problematisch ist dabei die Antriebslagerung der Förderschnecke, wenn es sich um die Verarbeitung von Kunststoff handelt. Bei der bekannten Mischvorrichtung befindet sich die Lagerung innerhalb des Mischbehälters. Eine Abdichtung dieser Lagerung gegen Kunststoff ist jedoch äußerst schwierig und aufwendig, insbesondere im unteren Bereich des Behälters. Auch würde bei einer rechtwinkligen Ableitung von zähfließenden Materialien, wie z.B. von glasfaserbeladenem Polyester, aufgrund der dadurch verursachten großen Reibungskräfte derartiges Material eventuell überhaupt nicht mehr gefördert werden.

Der Erfindung liegt daher die Aufgabe zugrunde, eine Beschickungsvorrichtung der eingangs genannten Art so auszugestalten, daß bei entsprechendem Druckaufbau bzw. Fülldruck und unter Vermeidung des Eindringens von Kunststoff in die Antriebslagerung der Förderschnecke eine kontinuierliche Beaufschlagung mit Ausgangsmaterial erzielt wird.

Diese Aufgabe wird gemäß den Merkmalen des Patentanspruchs 1 gelöst.

In vorteilhafter Weise sind das Austragsende der Förderschnecke und die Spritzgießeinheit zum Herstellen eines geschlossenen Systems mittels eines Rohrkrümmers miteinander verbunden.

Die Förderschnecke ist vorteilhaft in einem Winkel zwischen 15° und 25° gegenüber der Horizontalen bzw. der Spritzgießeinheit geneigt angeordnet. Eine derartige Neigung erleichtert die Beschickung der Vorrichtung bei geringer Bauhöhe.

Die Verschwenkbarkeit der Förderschnecke mit dem Dreh- und Hubantrieb und dem Einfüllschacht erleichtert vorteilhaft die Reinigung und Wartung der Vorrichtung, insbesondere unter Verwendung einer mittels einer Hubvorrichtung verschwenkbaren Traverse.

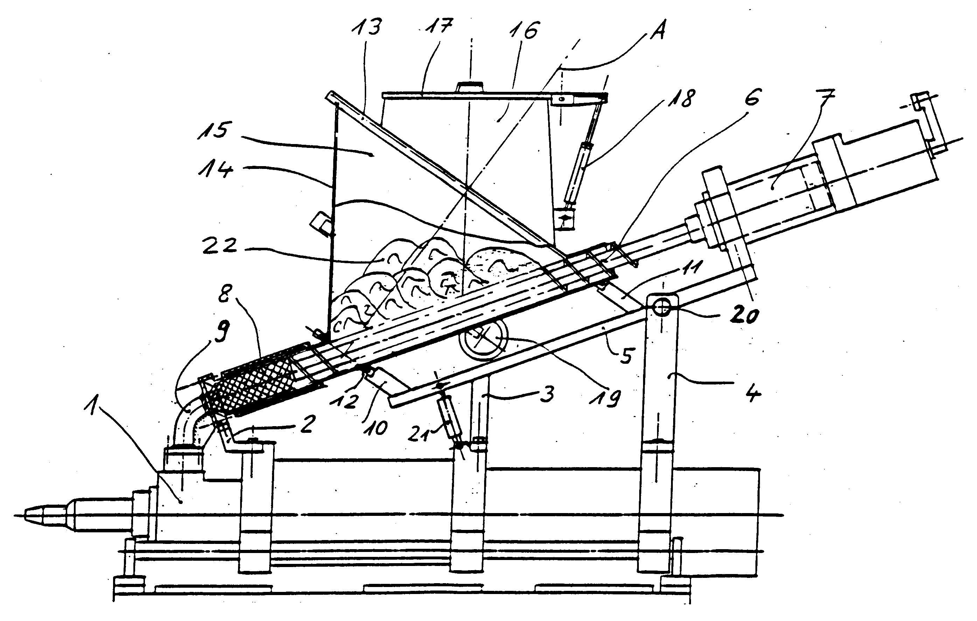

Ein Ausführungsbeispiel der Erfindung ist in der Zeichnung dargestellt.

Über eine Spritzgießeinheit 1 ist mittels Stützen 2,3 und 4 und über eine Traverse 5 eine Förderschnecke 6 mit einem Dreh- und Hubantrieb 7 gehalten. An ihrem Austragsende ist die Förderschnecke 6 mit einer Temperiervorrichtung 8 und einem Rohrkrümmer 9 zur Überführung des geförderten Materials in die Spritzgießeinheit 1 versehen.

Auf der Traverse 5 sind Konsolen 10 und 11 mit Lagerungen 12 und 13 für einen drehbaren Mantel 14 eines kegelstumpfförmigen Einfüllschachtes 15 vorgesehen. Am Einfüllschacht 15 ist ein feststehender Vorsatz 16 mit einem Deckel 17 auf der Lagerung 13 angeordnet. Der Deckel 17 ist mittels einer Kolben-Zylindereinheit 18 betätigbar. Der Mantel 14 ist mit einem Schneckenantrieb 19 versehen.

Die Traverse 5 ist an der Stütze 4 mittels eines Bolzens 20 drehbar gelagert. Nach Lösen der Stütze 2 und des Rohrkrümmers 9 kann die im wesentlichen aus der Förderschnecke 6 und dem Einfüllschacht 15 bestehende Einheit mittels einer hydraulischen Hubvorrichtung 21 zur Reinigung bzw. Wartung angehoben werden.

Über den Vorsatz wird Ausgangsmaterial 22 in den Einfüllschacht 15 gegeben. Durch die Rotation der Förderschnecke 6 und des Mantels 14 wird das Material aufgrund der Haftreibung in die Förderschnecke 6 eingezogen, in der Temperiervorrichtung 8 temperiert und über den Rohrkrümmer 9 in die Spritzgießeinheit 1 durch Hubbewegung der Förderschnecke 6 überführt.

## Patentansprüche

1. Vorrichtung zum Beschicken von Spritzgießeinheiten (1) mit von Schnecken nicht selbsttätig einzugsfähigen Materialien, insbesondere von nicht freifließenden oder zähfließenden Materialien wie z.B. glasfaserbeladenem Polyestermaterial, mit einem kegelstumpfförmigen Einfüllschacht (15) und einer sich um eine eigene Achse drehende Förderschnecke (6) mit einem eigenen Antrieb, wobei der ebenfalls mit einem eigenen Antrieb versehene Einfüllschacht (15) als Rotationskörper um eine aus der Senkrechten geneigte Rotationsachse (A) umläuft und die Förderschnecke (6) nach Art eines Kegelschneckenmischers durch den Rotationskörper an dessen tiefster Stelle nahe der Mantelinnenfläche und paralell zu dieser hindurchgeführt ist, dadurch gekennzeichnet, daß das Austragsende der Förderschnecke (6) und die Spritzgießeinheit (1) als geschlossenes System miteinander verbunden sind und der Antrieb der Förderschnecke (6) ein außerhalb des Einfüllschachtes (15) gelagerter Dreh- und Hubantrieb (7) ist.

2. Vorrichtung nach Anspruch 1, **dadurch gekennzeichnet,** daß das Austragsende der Förderschnecke (6) und die Spritzgießeinheit (1) mittels eines Rohrkrümmers (9) miteinander verbunden sind.

3. Vorrichtung nach Anspruch 1 oder 2, **dadurch gekennzeichnet,** daß der Dreh- und Hubantrieb (7) oberhalb des Einfüllschachtes (15) gelagert ist.

4. Vorrichtung nach einem der Ansprüche 1 bis 3, **dadurch gekennzeichnet,** daß die Förderschnecke (6) in einem Winkel zwischen 15° und 25° gegenüber der Horizontalen bzw. der Spritzgießeinheit (1) geneigt angeordnet ist.

5. Vorrichtung nach einem der Ansprüche 1 bis 4, **dadurch gekennzeichnet,** daß die Förderschnecke (6) mit dem Dreh- und Hubantrieb (7) und dem Einfüllschacht (15) verschwenkbar angeordnet ist.

6. Vorrichtung nach Anspruch 5, **dadurch gekennzeichnet,** daß die Lagerung des Dreh- und Hubantriebes (7) der Förderschnecke (6) und der Einfüllschacht (15) sich gegen eine mittels einer Hubvorrichtung (21) verschwenkbare Traverse (5) abstützen.

## Claims

1. Apparatus for feeding injection moulding machines (1) with materials that are not easily drawn in by screws, especially not-free-flowing or viscously flowing materials such as, for example, polyester material charged with glass fibres, the apparatus comprising a truncated conical feed shaft (15) and a feed screw (6) revolving about its own axis and having its own drive, wherein the feed shaft (15), also equipped with its own drive, revolves as a body of rotation about an axis of rotation (A) inclined from the vertical and the feed screw (6) passes, in the manner of a conical screw mixer, through the body of rotation at its lowest position near the inner face of the wall and parallel to it, characterized in that the discharge end of the feed screw (6) and the injection moulding machine (1) are connected together as a closed system and the drive for the feed screw (6) is a rotating and reciprocating drive (7) journalled outside the feed shaft (15).

2. Apparatus according to Claim 1, characterized in that the discharge end of the feed screw (6) and the injection moulding machine (1) are connected together by a pipe bend (9).

3. Apparatus according to Claim 1 or 2, characterized in that the rotating and reciprocating drive (7) is mounted above the feed shaft (15).

4. Apparatus according to one of Claims 1 to 3, characterized in that the feed screw (6) is inclined at an angle of between 15° and 25° to the horizontal or the injection moulding machine (1) respectively.

5. Apparatus according to one of Claims 1 to 4, characterized in that the feed screw (6) is arranged to be pivotal with the rotating and reciprocating drive (7) and the feed shaft (15).

6. Apparatus according to Claim 5, characterized in that the mounting of the rotating and reciprocating drive (7) of the feed screw (6) and the feed shaft (15) are supported by a beam (5) which can be tilted by means of a lifting device (21).

## Revendications

1. Dispositif pour alimenter des unités (1) de moulage par injection en matériaux que des vis sans fin ne peuvent pas faire automatiquement avancer, en particulier de matériaux ne coulant pas librement ou coulant à l'état visqueux, comme par exemple un matériau du type polyester chargé de fibres de verre, dispositif comportant une trémie (15) de remplissage en forme de tronc de cône et une vis sans fin (6) de transport entrainée en rotation autour de son propre axe avec son propre mécanisme d'entrainement, la trémie de remplissage (16), également munie de son propre mécanisme d'entrainement, tournant, comme un corps de révolution, autour d'un axe de rotation (A) incliné par rapport à la verticale, et la vis sans fin (6) de transport passant, à la façon d'un mélangeur à vis sans fin conique, à travers le corps de révolution, à sa position la plus basse, près de la surface latérale intérieure et parallèlement à cette surface, dispositif caractérisé par le fait que l'extrémité de sortie de la vis sans fin (6) de transport et l'unité (1) de moulage par injection sont reliées l'une à l'autre pour donner un système clos et que le mécanisme d'entrainement de la vis sans fin (6) de transport est un mécanisme de rotation et de levage (7) ayant ses portées en dehors de la trémie (15) de remplissage.

2. Dispositif selon la revendication 1, caractérisé par le fait que l'extrémité de sortie de la vis sans fin (6) de transport et l'unité (1) de moulage par injection sont reliées l'une à l'autre au moyen d'un coude tubulaire (9).

3. Dispositif selon la revendication 1 ou 2, caractérisé par le fait que le mécanisme (7) de rotation et de levage a sa portée au-dessus de la trémie (15) de remplissage.

4. Dispositif selon l'une des revendications 1 à 3, caractérisé par le fait que la vis sans fin (6) de transport est disposée inclinée sous un angle valant entre 15° et 25° par rapport à l'horizontale ou à l'unité (1) de moulage par injection.

5. Dispositif selon l'une des revendications 1 à 4, caractérisé par le fait que la vis sans fin (6) de transport est disposée de façon à pouvoir pivoter avec le mécanisme (7) d'entraînement et de levage ainsi qu'avec la trémie de remplissage (15).

6. Dispositif selon la revendication 5, caractérisé par le fait que la portée du mécanisme (7) de rotation et de levage de la vis sans fin (6) de transport et celle de la trémie de remplissage (15) s'appuient, chacune, contre une traverse (5) qu'un dispositif de levage (21) peut faire pivoter.
